# EUROPÄISCHE PATENTSCHRIFT

(11) **EP 4 043 307 B1**
(45) Veröffentlichungstag und Bekanntmachung des Hinweises auf die Patenterteilung: **04.06.2025**
(21) Anmeldenummer: 22152791.4
(22) Anmeldetag: 21.01.2022
(51) Int. Cl.: B60T 15/18

(54) **RELAISVENTILVORRICHTUNG UND BREMSVORRICHTUNG FÜR EIN FAHRZEUG MIT EINER SOLCHEN RELAISVENTILVORRICHTUNG**
RELAY VALVE DEVICE AND BRAKE DEVICE FOR A VEHICLE WITH SUCH A RELAY VALVE DEVICE
DISPOSITIF FORMANT SOUPAPE RELAIS ET DISPOSITIF DE FREINAGE POUR UN VÉHICULE DOTÉ D'UN TEL DISPOSITIF FORMANT SOUPAPE RELAIS

(30) Priorität: 10.02.2021 DE 102021103053
(43) Veröffentlichungstag der Anmeldung: 17.08.2022
(73) Patentinhaber: KNORR-BREMSE Systeme für Nutzfahrzeuge GmbH, 80809 München (DE)
(72) Erfinder: DEEG, Markus, 71735 Eberdingen (DE); GIANNUZZI, Michael, 74376 Gemmrigheim (DE); RÖTHER, Friedbert, 74389 Cleebronn (DE)

(56) Entgegenhaltungen:
- EP-A1- 1 391 363
- WO-A1-2011/029495
- DE-A1- 3 443 079

## Beschreibung

Die Erfindung betrifft eine Relaisventilvorrichtung, insbesondere für Nutzfahrzeuge, und eine Bremsvorrichtung für ein Fahrzeug, insbesondere für ein Nutzfahrzeug, mit einer solchen Rel isventilvorrichtung.

Relaisventilvorrichtungen, wie beispielsweise Proportional-Relaisventile, werden unter anderem in Fahrzeugen dafür eingesetzt, eine Druckluft an Verbraucher, wie Brems- oder Luftfederungsanlagen, dosiert weiterzuleiten. Bei Nutzfahrzeugen werden Sie zum Beispiel in diesem Zusammenhang auch für EBS-Bremssysteme genutzt, um den Bremsdruck für die Bremszylinder gemäß entsprechender Ansteuerung vorzugeben.

Eine Ausgestaltung eines Proportional-Relaisventils für Rad- und Achsmodulatoren von EBS-Bremssystemen offenbart beispielsweise die EP 1 391 363 A1. Bei diesem Proportional-Ventil kann ein Einlassventil durch einen über einen Steuerdruck bewegbaren Relaiskolben geöffnet werden, um einen Vorratsdruck in eine Relaisarbeitskammer einzuleiten. Zwischen der Kolbenplatte des Relaiskolbens und der Relaisarbeitskammer ist ein Zwischenelement mit einer Blende vorgesehen, um einen Druckausgleich wischen dem Vorratsdruck und Steuerdruck zeitlich zu verzögern. Um die zeitliche Verzögerung ausschließlich über die Blende zu steuern und Verwirbelungen zu vermeiden, wird das Zwischenelement gegenüber dem Kolbenzapfen des Relaiskolbens und der Gehäusewand jeweils mit einem Dichtelement abgedichtet. Die Dichtelemente unterliegen aufgrund der wechselnden Druckverhältnisse und damit einhergehenden Relativbewegungen oder zumindest Krafteinwirkungen einem Verschleiß, der Auswirkungen auf die Dichtigkeit haben kann.

In diesem Zusammenhang offenbart zudem die WO 2011/029495 A1 eine Relaisventileinrichtung mit einem Gehäuse, einem in dem Gehäuse angeordneten längsbeweglichen Relaiskolben, einer von dem Relaiskolben betätigbaren Arbeitsventileinrichtung, einer Auslasskammer zwischen dem Relaiskolben und der Arbeitsventileinrichtung und einer in der Auslasskammer angeordneten Zwischenwand, die die Auslasskammer in eine relaiskolbenseitige Kammer und eine Relaiskolben-abgewandte Relaisarbeitskammer teilt, wobei die Arbeitsventileinrichtung in der Relaisarbeitskammer angeordnet ist, und wobei die Zwischenwand eine Einrichtung zum Druckausgleich zwischen der relaiskolbenseitigen Kammer und der Relaisarbeitskammer aufweist.

Eine weitere Ausgestaltung einer Ventileinrichtung offenbart die DE 34 43 079 A1.

In Anbetracht der vorstehenden Ausführungen ist es somit Aufgabe der vorliegenden Erfindung, eine Relaisventilvorrichtung sowie eine Bremsvorrichtung mit einer solchen Relaisventilvorrichtung bereitzustellen, bei denen zumindest eine Abdichtung zwischen dem Zwischenelement und dem Gehäuse ohne ein zusätzliches Dichtelement erfolgen kann.

Die Aufgabe wird durch eine Relaisventilvorrichtung und eine Bremsvorrichtung für ein Fahrzeug mit einer solchen Relaisvorrichtung gemäß den unabhängigen Ansprüchen gelöst. Vorteilhafte Weiterbildungen der Erfindung sind in den abhängigen Ansprüchen enthalten.

Erfindungsgemäß weist eine Relaisventilvorrichtung, insbesondere für Nutzfahrzeuge,
- einen in einem Gehäuse angeordneten Relaiskolben, der einen sich von einer Kolbenplatte in einer Längsrichtung erstreckenden Kolbenzapfen aufweist und in der Längsrichtung in einer Kolbenplattenführung bewegbar ist, wobei die Kolbenplatte einen Innenraum des Gehäuses in ein kolbenzapfenseitiges Volumen und einen kolbenzapfenabgewandtes Volumen unterteilt,
- eine Ventileinrichtung, die durch den Kolbenzapfen betätigbar ist, um ein Fluid aus einem Vorratsdruckreservoir in das kolbenzapfenseitige Volumen einleiten zu können, und
- ein um den Kolbenzapfen angeordnetes und in der Längsrichtung in einer Zwischenelementführung relativ dazu bewegbares Zwischenelement, das das kolbenzapfenseitige Volumen wiederum in ein kolbenplattenseitiges Volumen und ein kolbenplattenabgewandtes Volumen unterteilt und über zumindest eine Durchgangsöffnung die Durchflussrate des Fluids zur Kolbenplatte begrenzt, auf,
wobei die Relaisventilvorrichtung einen Zwischenelementanschlag aufweist, der die Bewegung des Zwischenelements in Richtung der Kolbenplatte begrenzt und an dem das Zwischenelement über den Fluiddruck abdichtend in Anlage bringbar ist.

Der Relaiskolben wird dabei beispielsweise über einen Steuerdruck, der im kolbenzapfenabgewandten Volumen auf die Kolbenplatte aufgebracht wird, in der Kolbenplattenführung in der Längsrichtung in einen vom kolbenzapfenabgewandten Volumen abgewandte Richtung bewegt. In Anlage mit der Ventileinrichtung, zum Beispiels über Anlage eines der Kolbenplatte abgewandten Endabschnitt des Kolbenzapfens mit einer dem abgewandten Endabschnitt des Kolbenzapfens zugewandten Fläche der Ventileinrichtung, und entsprechender vorstehender Bewegung bzw. Weiterbewegung des Relaisventils kann die Ventileinrichtung eine fluide Verbindung von dem Vorratsdruckreservoir zum kolbenzapfenseitigen Volumen öffnen. Das kolbenplattenabgewandte Volumen des kolbenzapfenseitigen Volumens kann einen Verbraucheranschluss aufweisen, über den der Vorratsdruck an einen Verbraucher, wie einen Bremszylinder, weiterleitbar ist. Für einen Druckausgleich zwischen dem im kolbenzapfenabgewandten Volumen anliegenden Steuerdrucks und dem im kolbenzapfenseitigen Volumen anliegenden Vorratsdruck weist das Zwischenelement zumindest eine Durchgangsöffnung auf. Durch die Ausgestaltung dieser zumindest einen Durchgangsöffnung des Zwischenelements kann die Durchflussrate des aus dem Vorratsdruckreservoir eingeleiteten Fluids auf eine Durchflussrate reguliert werden, die den Druckausgleich um eine vorbestimmte Zeit verzögert. Zur Vermeidung von Schwingungen und einer damit einhergehenden Geräuschentwicklung und/oder damit einhergehenden Materialbelastungen ist die Relaisventilvorrichtung derart konfiguriert, dass das Zwischenelement über den Fluiddruck des aus dem Vorratsdruckreservoir eingeleiteten Fluids gegen den Zwischenelementanschlag gedrückt werden kann, um mit diesem abdichtend in Anlage gebracht zu werden. Eine solche Abdichtung muss dabei nicht vollständig fluiddicht ausgeführt werden, sondern kann auch nur soweit abdichtend sein, dass eine verbleibende Fluiddurchlässigkeit keinen wesentlichen Beitrag zur Schwingungsanregung und der damit verbundenen Geräuschentwicklung und/oder Materialbelastung in Bezug auf vorgegebene Toleranzen leistet. Über eine derartige Abdichtung zwischen dem Zwischenelement und dem Zwischenelementanschlag über den im kolbenplattenabgewandten Volumen am Zwischenelement anliegenden Fluiddruck kann auf eine Dichtelement zur Abdichtung an dieser Stelle verzichtet werden.

In einer Ausgestaltung ist das Zwischenelement in einem Bereich zur Anlage am Zwischenelementanschlag planparallel oder schräg ausgebildet.

Eine planparallele Ausgestaltung bezieht sich dabei auf eine parallele Ausgestaltung der Anschlagsfläche des Zwischenelements zur Anschlagsfläche des Zwischenelementanschlags, um eine möglichst große Kontaktfläche zur Abdichtung auszubilden. Bei einer schrägen Ausgestaltung des Anschlagbereichs des Zwischenelements kann sich nahezu unabhängig von der Ausgestaltung des Anschlagbereichs des Zwischenelementanschlags zumindest ein Anschlagspunkt zur Abdichtung ergeben.

Gemäß einer Weiterbildung weist die Relaisventilvorrichtung ein Dichtelement auf, das so vorgesehen ist, dass das Zwischenelement über das Dichtelement zum Kolbenzapfen abdichtbar ist.

Die Abdichtung zwischen dem um den Kolbenzapfen angeordneten Zwischenelement und dem Kolbenzapfen über das Dichtelement verhindert vergleichbar zum Zwischenelementanschlag eine wesentliche Einleitung des Fluids aus dem Vorratsdruckreservoir in das kolbenplattenseitige Volumen außerhalb der dafür vorgesehenen zumindest einen Durchgangsöffnung. Die Abdichtung muss auch hier nicht vollständig fluiddicht sein, sondern kann auf eine bedarfsgerechte Abdichtung gemäß den vorherigen Ausführungen begrenzt sein.

Die Abdichtung über das Dichtelement ist insbesondere derart konfiguriert, dass der Kolbenzapfen in der Längsrichtung relativ zum Zwischenelement bewegbar ist, so dass die Abdichtung zwischen dem Zwischenelement und dem Kolbenzapfen über das Dichtelement unabhängig von der Anlage des Zwischenelements an einem Zwischenelementanschlag ist.

Insbesondere ist der Zwischenelementanschlag durch das Gehäuse ausgebildet.

Grundsätzlich ist das Zwischenelement insbesondere in Bezug auf die Längsrichtung radial nach innen zum Kolbenzapfen und in einem radial äußeren Bereich zur Zwischenelementführung abzudichten, um die Fluideinleitung in das kolbenplattenseitige Volumen im Wesentlichen auf die zumindest eine Durchgangsöffnung zu beschränken. Bevorzugt ist der Zwischenelementanschlag dabei zumindest zur Abdichtung zum radial äußeren Bereich zur Zwischenelementführung vorzusehen, da diese Abdichtung von der Bewegung des Relaiskolbens unabhängig ist.

Durch die Ausbildung des Zwischenelementanschlags durch das Gehäuse kann die der radial äußere Bereich zur Zwischenelementführung in einfacher Weise ausgebildet werden. Die Abdichtung erfolgt dabei nicht über in Bezug auf die Längsrichtung jeweils radiale Flächen, sondern über in die Längsrichtung aneinander- bzw. gegenüberliegende Flächen des den Zwischenelementanschlag ausbildenden Gehäuses und des Zwischenelements. Alternativ oder ergänzend zu einem durch das Gehäuse ausgebildeten Zwischenelementanschlag kann der Zwischenelementanschlag oder zumindest ein Zwischenelementanschlagabschnitt auch durch ein Zwischenelementanschlagselement ausgebildet werden, das beispielsweise federnd an der dem kolbenzapfenseitigen Volumen zugewandten Kolbenplattenseite gelagert ist.

Gemäß einer Weiterbildung ist die Zwischenelementführung zur Ausbildung des Zwischenelementanschlags gegenüber der Kolbenplattenführung in einer vom Kolbenzapfen abgewandten radialen Richtung in Bezug auf die Längsrichtung rückversetzt, so dass der Übergang zwischen der Kolbenplattenführung und der Zwischenelementführung einen Absatz als Zwischenelementanschlag ausbildet.

Das Gehäuse bildet dabei direkt oder indirekt die Zwischenelementführung und die Kolbenplattenführung aus. Durch den Rückversatz der Zwischenelementführung gegenüber der Kolbenplattenführung in der vom Kolbenzapfen abgewandten radialen Richtung in Bezug auf die Längsrichtung ergibt sich somit der Zwischenelementanschlag als Absatz, der die Bewegung des Zwischenelements in der Längsrichtung in Richtung der Kolbenplatte begrenzt und bei entsprechender Druckbeaufschlagung in Richtung der Kolbenplatte das Zwischenelement abdichtend mit dem Zwischenelementanschlag in Anlage bringt. Alternativ kann das Gehäuse den Zwischenelementanschlag auch über einen anderweitig radial nach innen in Richtung des Kolbenzapfens weisenden Vorsprung ausbilden.

In einer Ausgestaltung weist die Relaisventilvorrichtung einen Zwischenelementsitz auf, der in der Längsrichtung in einer Zwischenelementsitzführung bewegbar und zwischen der Ventileinrichtung und dem Zwischenelement angeordnet ist, und wobei der Zwischenelementsitz derart konfiguriert ist, dass der Zwischenelementsitz zumindest abschnittsweise mit dem Zwischenelement in Anlage bringbar ist und der Zwischenelementsitz das Zwischenelement über den Fluiddruck mit dem Zwischenelementanschlag abdichtend in Anlage bringen kann.

Die Anlage des Zwischenelements am Zwischenelementanschlag wird somit über den an einer dem Zwischenelement in der Längsrichtung abgewandten Seite des Zwischenelementsitzes angreifenden Fluiddruck des Fluids aus dem Vorratsdruckreservoir und der damit einhergehenden Bewegung des Zwischenelementsitzes in der Längsrichtung in Richtung des Zwischenelements unterstützt. Mit anderen Worten wird das Zwischenelement über den Zwischenelementsitz gegen den Zwischenelementanschlag gedrückt.

Eine lediglich abschnittsweise Anlage des Zwischenelementsitzes am Zwischenelement ermöglicht es, dass Bereiche des kolbenzapfenseitigen Volumens durch die Anlage des Zwischenelementsitzes am Zwischenelement gegeneinander abgedichtet werden. Demnach kann beispielsweise das Fluid aus dem Vorratsdruckreservoir bei geöffneter Ventileinrichtung durch die nicht in Anlage befindlichen Abschnitte hindurchgeleitet werden, um zum Beispiel zu einem Verbraucheranschluss und/oder der zumindest einen Durchgangsöffnung des Zwischenelements zu gelangen. Alternativ oder ergänzend kann eine entsprechende Durchleitung auch über zumindest eine Durchgangsöffnung im Zwischenelement und/oder im Zwischenelementsitz vorgesehen werden.

In einer Ausgestaltung kann der Zwischenelementsitz einteilig mit dem Zwischenelement ausgeführt werden. Der Zwischenelementsitz und das Zwischenelement können demnach in dieser Ausgestaltung gemeinsam bewegt werden. Mit anderen Worten kann das Zwischenelement derart ausgebildet sein, dass es auf einer der Kolbenplatte abgewandten Seite einen Endabschnitt aufweist, der einem Zwischenelementsitz entspricht, beispielsweise die im Folgenden beschriebene Abdichtung mit der Ventileinrichtung ermöglicht.

Insbesondere ist die Relaisventilvorrichtung derart konfiguriert, dass der Zwischenelementsitz in einer Position des Relaiskolbens, in der die Ventileinrichtung nicht betätigt wird, auf der Ventileinrichtung abdichtend aufsitzt.

Der Zwischenelementsitz dient somit nicht nur der Überführung des Zwischenelements in Anlage mit dem Zwischenelementanschlag, sondern kann darüber hinaus das kolbenzapfenseitige Volumen zum Vorratsdruckreservoir hin abdichten.

Gemäß einer Weiterbildung weist die Relaisventilvorrichtung einen zwischenelementseitigen Zwischenelementsitzanschlag auf, der die Bewegung des Zwischenelementsitzes in Richtung des Zwischenelements begrenzt und an dem der Zwischenelementsitz über den Fluiddruck in Anlage bringbar ist.

Durch die mit dem zwischenelementseitigen Zwischenelementsitzanschlag einhergehende Bewegungsbegrenzung des Zwischenelementsitzes in der Längsrichtung in Richtung des Zwischenelements wird die auf das Zwischenelement ausübbare Kraft gleichermaßen begrenzt. Das Zwischenelement kann somit über den Zwischenelementsitz nur mit einer vorbestimmten Maximalkraft gegen den Zwischenelementanschlag gedrückt werden. Hierdurch kann Verschleißerscheinungen und/oder Beschädigungen am Zwischenelement und/oder Zwischenelementanschlag vorgebeugt werden. Mit anderem Worten kann der zwischenelementseitige Zwischenelementsitzanschlag als Überlastschutz für das Zwischenelement und/oder den Zwischenelementanschlag eingesetzt werden.

Insbesondere ist der zwischenelementseitige Zwischenelementsitzanschlag durch das Gehäuse ausgebildet.

Vergleichbar zur Ausbildung des Zwischenelementanschlags kann auch der zwischenelementseitige Zwischenelementsitzanschlag in einfacher Weise durch das Gehäuse ausgebildet sein.

Bevorzugt ist die Zwischenelementsitzführung zur Ausbildung des zwischenelementseitigen Zwischenelementsitzanschlags gegenüber der Zwischenelementführung in einer vom Kolbenzapfen abgewandten radialen Richtung in Bezug auf die Längsrichtung rückversetzt, so dass der Übergang zwischen der Zwischenelementführung und der Zwischenelementsitzführung einen Absatz als zwischenelementseitigen Zwischenelementsitzanschlag ausbildet.

Das Gehäuse bildet dabei ebenfalls vergleichbar zum Zwischenelementanschlag direkt oder indirekt die Zwischenelementsitzführung und die Zwischenelementführung aus.

Durch den Rückversatz der Zwischenelementsitzführung gegenüber der Zwischenelementführung in der vom Kolbenzapfen abgewandten radialen Richtung in Bezug auf die Längsrichtung ergibt sich somit der zwischenelementseitige Zwischenelementsitzanschlag als Absatz, der die Bewegung des Zwischenelementsitzes in der Längsrichtung in Richtung des Zwischenelements begrenzt und bei entsprechender Druckbeaufschlagung in Richtung des Zwischenelements den Zwischenelementsitz mit dem zwischenelementseitigen Zwischenelementsitzanschlag in Anlage bringt. Alternativ kann das Gehäuse den zwischenelementseitigen Zwischenelementsitzanschlag auch über einen anderweitig radial nach innen in Richtung des Kolbenzapfens weisenden Vorsprung ausbilden.

Gemäß einer Weiterbildung ist in der Längsrichtung der maximale Abstand des Zwischenelements zum Zwischenelementanschlag kleiner oder gleich dem maximalen Abstand des Zwischenelementsitzes zum zwischenelementseitigen Zwischenelementsitzanschlag.

Demnach kann der Zwischenelementsitz erst dann mit dem zwischenelementseitigen Zwischenelementsitzanschlag in Anlage gebracht werden, wenn auch das Zwischenelement mit dem Zwischenelementanschlag in Anlage bringbar ist. Mit anderen Worten wird die Bewegung des Zwischenelementsitzes in Richtung des Zwischenelements durch den zwischenelementseitigen Zwischenelementsitzanschlag frühestens dann begrenzt, wenn das Zwischenelement durch den Zwischenelementsitz in Anlage mit dem Zwischenelementanschlag gebracht wurde.

Bevorzugt ist der maximale Abstand des Zwischenelements zum Zwischenelementanschlag kleiner als der maximale Abstand des Zwischenelementsitzes zum zwischenelementseitigen Zwischenelementsitzanschlag. Hierdurch kann sichergestellt werden, dass das Zwischenelement nicht nur über den Zwischenelementsitz mit dem Zwischenelementanschlag in Anlage bringbar ist, sondern über eine darüber hinaus gehende Bewegung des Zwischenelementsitzes die Anlage des Zwischenelements am Zwischenelementanschlag mit Druck beaufschlagbar ist, um die Abdichtung zu verbessern.

In einer Ausgestaltung weist die Relaisventilvorrichtung einen zwischenelementabgewandten Zwischenelementsitzanschlag auf, der die Bewegung des Zwischenelementsitzes in einer dem Zwischenelement abgewandten Richtung begrenzt.

Der zwischenelementabgewandte Zwischenelementsitzanschlag begrenzt somit die Bewegung des Zwischenelementsitzes in eine dem zwischenelementseitigen Zwischenelementanschlag abgewandte Richtung. Im Sinne des vorstehenden maximalen Abstands des Zwischenelementsitzes zum zwischenelementseitigen Zwischenelementsitzanschlag kann dieser maximale Abstand durch den zwischenelementabgewandten Zwischenelementsitzanschlag definiert werden.

Der zwischenelementabgewandte Zwischenelementsitzanschlag kann insbesondere dazu genutzt werden, die erforderliche Bewegung des Zwischenelementsitzes, um das Zwischenelement mit dem Zwischenelementanschlag in Anlage zu bringen, ungeachtet der Druckverhältnisse zu begrenzen. Über die damit eingestellte Wegstrecke kann das Zwischenelement über den Zwischenelementsitz in einer vorbestimmten Zeitdauer mit dem Zwischenelementanschlag in Anlage gebracht werden.

Alternativ oder ergänzend kann die Relaisventilvorrichtung derart konfiguriert sein, dass der Zwischenelementsitz bei Anlage mit dem zwischenelementabgewandten Zwischenelementsitzanschlag in einer Position des Relaiskolbens, in der die Ventileinrichtung nicht betätigt wird, auf der Ventileinrichtung abdichtend aufsitzt. Wenn der Relaiskolben die Ventileinrichtung nun in die Längsrichtung in eine dem kolbenzapfenabgewandten Volumen entgegengesetzte Richtung bewegt, kann der Zwischenelementsitz aufgrund des zwischenelementabgewandten Zwischenelementsitzanschlags nicht mitbewegt werden. Durch die dadurch gebildete Beabstandung zwischen dem Zwischenelementsitz und der Ventileinrichtung kann ein Fluid aus dem Vorratsdruckreservoir in das kolbenzapfenseitige Volumen eingeleitet werden. Der Zwischenelementsitz kann somit mit der Ventileinrichtung zur Einleitung des Fluids aus dem Vorratsdruckreservoir und zur Beendigung des Einleitungsvorgangs zusammenwirken.

Insbesondere ist der zwischenelementabgewandte Zwischenelementsitzanschlag durch zumindest einen Anschlagstift ausgebildet.

Durch die Ausbildung als zumindest ein Anschlagstift nimmt der zwischenelementabgewandte Zwischenelementsitzanschlag vergleichsweise wenig Raum ein, so dass ein vorratsdruckreservoirseitiges Volumen im Wesentlichen unbeeinflusst bleibt. Sofern ein solcher Anschlagstift nicht integral mit dem Gehäuse ausgebildet ist, kann dieser auch leicht austauschbar sein. Um eine Länge des Anschlagstifts bedarfsweise einstellen zu können, kann der Anschlagstift zumindest auch abschnittsweise an einem dem Zwischenelementsitz abgewandten Ende ein Gewinde aufweisen, das beispielsweise unterschiedlich tief in eine Anschlagstiftaufnahme, wie eine Gehäusewand, einschraubbar ist.

Gemäß einer Weiterbildung weisen der Zwischenelementsitz und das Zwischenelement auf einander gegenüberliegenden Seiten jeweils zumindest einen Konturabschnitt auf, wobei die Konturabschnitte so konfiguriert sind, dass sie zur Ausbildung einer Verdrehsicherung in Bezug auf die Längsrichtung gegenseitig formschlüssig in Anlage bringbar sind.

Durch die Einleitung des Fluids aus dem Vorratsdruckreservoir in das kolbenzapfenseitige Volumen können Verwirbelungen auftreten, durch die das Zwischenelement und/oder der Zwischenelementsitz in Bezug auf die Längsrichtung zueinander verdreht werden könnten. Über jeweils zueinander korrespondierende Konturabschnitte des Zwischenelements und des Zwischenelementsitzes, die zumindest bei einer Druckbeaufschlagung durch das Fluid aus dem Vorratsdruckreservoir in Eingriff bringbar sind, kann dies durch die damit einhergehende Verdrehsicherung verhindert werden. Entsprechende Konturabschnitte können beispielsweise als Verzahnungspaarung oder eine Stift-Stiftaufnahme-Paarung ausgebildet sein. Bei einer vollumfänglichen Konturausbildung auf Seiten des Zwischenelements und/oder des Zwischenelementsitzes müssen das Zwischenelement und der Zwischenelementsitz nicht zwingend zuvor in eine relative Eingriffsposition zueinander bewegt werden bzw. es ergeben sich mehr Orientierungsmöglichkeiten. Zudem können die Konturabschnitte auch derart ausgestaltet sein, dass durch sie neben dem Formschluss auch zumindest eine Öffnung zur Fluidweiterleitung zwischen dem Zwischenelement und dem Zwischenelementsitz ausgebildet wird.

Ein weiterer Aspekt der Erfindung betrifft eine Bremsvorrichtung für ein Fahrzeug, insbesondere ein Nutzfahrzeug, wobei die Bremseinrichtung zumindest eine Relaisventilvorrichtung gemäß den vorstehenden Ausführungen aufweist.

Der Einsatz der Relaisventilvorrichtung für die Bremseinrichtung ergibt sich analog zu den vorstehend benannten Vorteilen.

Im Folgenden wird die Erfindung unter Bezugnahme auf die beigefügte Figur näher erläutert. Die Figur zeigt im Einzelnen:

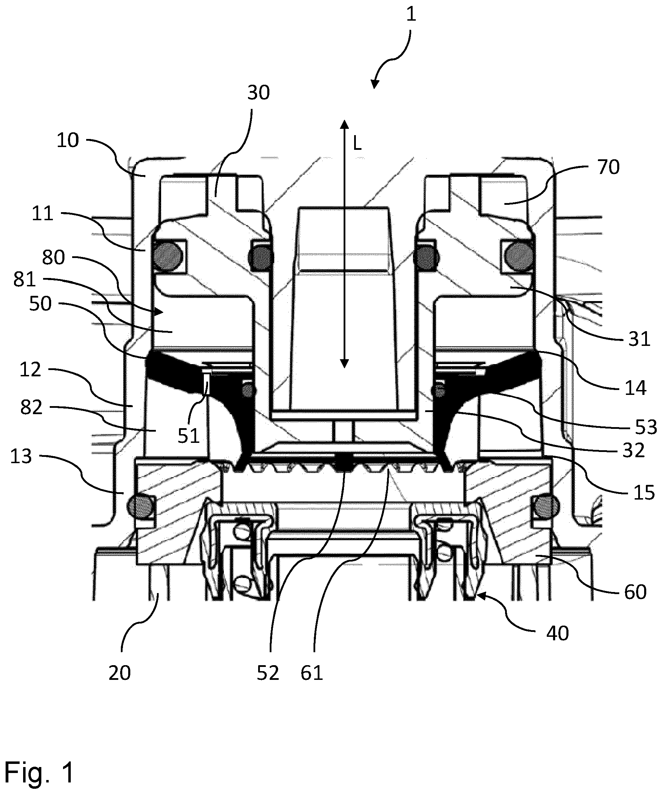

**Figur 1** eine schematische Schnittansicht einer Relaisventilvorrichtung gemäß einer exemplarischen Ausführungsform der Erfindung

**Figur 1** zeigt eine schematische Schnittansicht einer erfindungsgemäßen Relaisventilvorrichtung 1 in einer Längsrichtung L gemäß einer exemplarischen Ausführungsform er Erfindung. Die Relaisvorrichtung 1 weist ein Gehäuse 10 auf, in dem ein Relaiskolben 30 in der Längsrichtung L bewegbar angeordnet ist. Der Relaiskolben 30 weist eine Kolbenplatte 31 auf, über die der Relaiskolben 30 in einer durch das Gehäuse 10 gebildeten Kolbenplattenführung 11 zur Bewegung in der Längsrichtung L geführt wird. Ausgehend von der Kolbenplatte 31 erstreckt sich ein Kolbenzapfen 32 in der Längsrichtung L in Richtung einer Ventileinrichtung 40. Der Relaiskolben 30 wird über den Kolbenzapfen 32 bei einer Bewegung des Relaiskolbens 30 in der Längsrichtung auch auf einer in Bezug auf die Längsrichtung L radial innen liegenden Seite durch eine Kolbenzapfenführung 16 geführt. Die Kolbenplatte 31 kann über eine Dichtung zur Kolbenplattenführung 11 hin abgedichtet werden und teilt das Gehäusevolumen in ein kolbenzapfenabgewandtes Volumen 70 und ein kolbenzapfenseitiges Volumen 80.

Zur Betätigung der Ventileinrichtung 40 kann in das kolbenzapfenabgewandte Volumen 70 Druckluft, beispielsweise ein Steuerdruck bei einem Relaisventil für Bremsen, eingeleitet werden. Die Druckluft wirkt auf die Kolbenplatte 31, wodurch der Relaiskolben 30 in der Längsrichtung L in Richtung der Ventileinrichtung 40 bewegt wird. Erreicht das der Kolbenplatte 31 abgewandte Ende des Kolbenzapfens 32 die Ventileinrichtung 40 und wird weiterbewegt, wird die Ventileinrichtung in der Bewegungsrichtung des Relaiskolbens 30 mitbewegt. Hierdurch öffnet sich eine fluide Verbindung zwischen der Ventileinrichtung 40 und einem später noch beschriebenen Zwischenelementsitz 60 zum kolbenzapfenseitigen Volumen 80. Über die fluide Verbindung kann beispielsweise ein Vorratsdruck in das kolbenzapfenseitige Volumen 80 eingeleitet werden, der über einen hier nicht dargestellten Anschluss an einen Verbraucher, wie eine Bremseinrichtung, weiterleitbar ist.

Für eine zeitliche Verzögerung des Druckausgleichs zwischen dem kolbenzapfenabgewandten Volumen 70 und dem kolbenzapfenseitigen Volumen 80 zur Vermeidung von Schwingungen und damit einhergehenden Schädigungen und/oder Geräuschentwicklungen wird ein Zwischenelement 50 eingesetzt. Das Zwischenelement 50 ist ringförmig um den Kolbenzapfen 32 angeordnet und teilt das kolbenzapfenseitige Volumen 80 in ein kolbenplattenseitiges Volumens 81 und ein kolbenplattenabgewandtes Volumen 82. Über eine im Zwischenelement 50 ausgebildete Durchgangsöffnung 51 stehen das kolbenplattenseitige Volumen 81 und das kolbenplattenabgewandte Volumen 82 in fluider Verbindung. Da das Zwischenelement 50 in Bezug auf die Längsrichtung L radial zum Kolbenzapfen 32 hin über eine Dichtelement 53 abgedichtet ist und in einer Zwischenelementführung 12 in der Längsrichtung L und somit gegen einen Zwischenelementanschlag 14 bewegbar ist, wirkt das Zwischenelement 50 als Drossel oder Blende zur zeitlichen Verzögerung des Druckausgleichs. Mit anderen Worten kann die zeitliche Verzögerung des Druckausgleichs durch die Ausgestaltung der Durchgangsöffnung 51 maßgeblich vorbestimmt werden. Durch den zwischen der Kolbenplattenführung 11 und der Zwischenelementführung 12 durch das Gehäuse 10 gebildeten Zwischenelementanschlag 14 wird das Zwischenelement 50 zum Gehäuse hin ausreichend abgedichtet, so dass auf weitere Dichtelemente in diesem Bereich verzichtet werden kann.

Die Bewegung des Zwischenelements 50 in der Längsrichtung L wird in einer der Kolbenplatte 31 zugewandten Richtung durch den Zwischenelementanschlag 14 und in einer der Kolbenplatte 31 abgewandten Richtung durch den Zwischenelementsitz 60 begrenzt. Der Zwischenelementsitz 60 ist hier ringförmig ausgebildet und in der Längsrichtung L in einer durch das Gehäuse 10 gebildeten Zwischenelementsitzführung 13 bewegbar geführt. Die Bewegung des Zwischenelementsitzes 60 in der Längsrichtung L wird in einer dem Zwischenelement 50 zugewandten Richtung durch einen zwischenelementseitigen Zwischenelementsitzanschlag 15 und in einer dem Zwischenelement 50 abgewandten Richtung durch einen zwischenelementabgewandten Zwischenelementsitzanschlag 20, der hier durch Anschlagstifte ausgebildet wird, begrenzt. Durch den zwischenelementabgewandten Zwischenelementsitzanschlag 20 wird verhindert, dass sich der Zwischenelementsitz 60 in der Längsrichtung L mit der Ventileinrichtung 40 soweit mitbewegt, dass sich die fluide Verbindung zum kolbenzapfenseitigen Volumen für den Vorratsdruck nicht öffnen kann. Der zwischenelementseitige Zwischenelementsitzanschlag 15 begrenzt die auf das Zwischenelement 50 durch den Zwischenelementsitz 60 übertragbaren Anpresskräfte, um dadurch bedingte Schädigungen des Zwischenelements 50 und/oder Zwischenelementsitzes 60 zu vermeiden. Zur ausreichenden Abdichtung ist in der Längsrichtung L der maximale Abstand des Zwischenelements 50 zum Zwischenelementanschlag 14 kleiner oder gleich dem maximalen Abstand des Zwischenelementsitzes 60 zum zwischenelementseitigen Zwischenelementsitzanschlag 15.

Zudem weist der Zwischenelementsitz 60 auf seiner dem Zwischenelement 50 zugewandten Seite einen Konturabschnitt 61 auf. Der Konturabschnitt 61 des Zwischenelementsitzes 60 ist mit einem korrespondierenden Konturabschnitt 52 des Zwischenelements 50 in Anlage bringbar. Durch die korrespondierenden und in Anlage ineinandergreifenden Konturabschnitte können das Zwischenelement 50 und der Zwischenelementsitz 60 in Bezug auf die Längsrichtung L verdrehsicher zu einander gehalten werden. Die Konturabschnitte 52 und 61 sind hier als Verzahnungspaarung ausgebildet. Der Zwischenelementsitz 60 weist beispielsweise eine gleichmäßig umlaufende, durchgehende Verzahnungsstruktur als Konturabschnitt 61 auf. Der dem Zwischenelementsitz 60 zugewandte Konturabschnitt 52 des Zwischenelements 50 weist hierzu korrespondierende Verzahnungen auf. Diese Verzahnungen sind jedoch noch durchgehend umlaufend, sondern derart voneinander beabstandet, dass Verzahnungsstrukturen des Konturabschnitts 61 bei Anlage des Zwischenelementsitzes 60 am Zwischenelement 50 freibleibend sind. Somit wird eine fluide Verbindung zum kolbenzapfenseitigen Volumen 80 für einen über die Ventileinrichtung 40 einleitbaren Vorratsdruck geschaffen.

Die Erfindung ist nicht auf die beschriebenen Ausführungsformen beschränkt. Auch wenn in der vorstehend beschriebenen Ausführungsform nur eine Durchgangsöffnung gezeigt ist, können beispielsweise auch mehrere Durchgangsöffnungen vorgesehen sein. Auch kann der Zwischenelementanschlag 14 über einen in Bezug auf die Längsrichtung L radialen Ringspalt ausgebildet werden. Darüber hinaus kann beispielsweise auch das Dichtelement 53 entfallen oder eine Abdichtung über eine vergleichsweise enge Spaltdichtung ersetzt werden. Alternativ oder ergänzend kann ein Zwischenelementanschlag auch über den Kolbenzapfen 32, also auf einer in Bezug auf die Längsrichtung L radial innen liegenden Seite des Zwischenelements 50, ausgebildet werden. Der Kolbenzapfen 32 kann hierzu einen in Bezug auf die Längsrichtung L radial nach innen rückversetzten Abschnitt oder einen radial nach außen weisenden Vorsprung aufweisen. Auch wenn die Relaiskolbenvorrichtung 1 in der beschriebenen Ausführungsform ein Zwischenelement 50 und einen hiervon separaten Zwischenelementsitz 60 aufweist, können das Zwischenelement 50 und der Zwischenelementsitz 60 ungeachtet weiterer Ausgestaltungsmerkmal darüber hinaus auch einteilig ausgebildet sein. Beispielsweise kann dann die einteilige Kombination aus dem Zwischenelement 50 und dem Zwischenelementsitz 60 gemäß Fig. 1 gemeinsam in der Längsrichtung L zwischen einer der Kolbenplatte 31 zugewandten Endposition, die durch den Zwischenelementanschlag 14 bestimmt wird, und einer der Kolbenplatte 31 abgewandten Endposition, die durch den zwischenelementabgewandten Zwischenelementsitzanschlag 20 bestimmt wird, bewegt werden.

### BEZUGSZEICHENLISTE

- 1: Relaisventilvorrichtung
- 10: Gehäuse
- 11: Kolbenplattenführung
- 12: Zwischenelementführung
- 13: Zwischenelementsitzführung
- 14: Zwischenelementanschlag
- 15: zwischenelementseitiger Zwischenelementsitzanschlag
- 16: Kolbenzapfenführung
- 20: zwischenelementabgewandter Zwischenelementsitzanschlag (Anschlagstift)
- 30: Relaiskolben
- 31: Kolbenplatte
- 32: Kolbenzapfen
- 40: Ventileinrichtung
- 50: Zwischenelement
- 51: Durchgangsöffnung
- 52: Konturabschnitt (Zwischenelement)
- 53: Dichtelement
- 60: Zwischenelementsitz
- 61: Konturabschnitt (Zwischenelementsitz)
- 70: kolbenzapfenabgewandtes Volumen
- 80: kolbenzapfenseitiges Volumen
- 81: kolbenplattenseitiges Volumen
- 82: kolbenplattenabgewandtes Volumen
- L: Längsrichtung

## Patentansprüche

1. Relaisventilvorrichtung (1), insbesondere für Nutzfahrzeuge, aufweisend:
einen in einem Gehäuse (10) angeordneten Relaiskolben (30), der einen sich von einer Kolbenplatte (31) in einer Längsrichtung (L) erstreckenden Kolbenzapfen (32) aufweist und in der Längsrichtung (L) in einer Kolbenplattenführung (11) bewegbar ist, wobei die Kolbenplatte (30) einen Innenraum des Gehäuses (10) in ein kolbenzapfenseitiges Volumen (80) und einen kolbenzapfenabgewandtes Volumen (70) unterteilt,
eine Ventileinrichtung (40), die durch den Kolbenzapfen (32) betätigbar ist, um ein Fluid aus einem Vorratsdruckreservoir in das kolbenzapfenseitige Volumen (80) einleiten zu können, und
ein um den Kolbenzapfen (32) angeordnetes Zwischenelement (50), das das kolbenzapfenseitige Volumen (80) wiederum in ein kolbenplattenseitiges Volumen (81) und ein kolbenplattenabgewandtes Volumen (82) unterteilt und über zumindest eine Durchgangsöffnung (51) die Durchflussrate des Fluids zur Kolbenplatte (31) begrenzt, **dadurch gekennzeichnet, dass** das Zwischenelement (50) in der Längsrichtung (L) in einer Zwischenelementführung (12) relativ dazu bewegbar ist und dass
die Relaisventilvorrichtung (1) einen Zwischenelementanschlag (14) aufweist, der die Bewegung des Zwischenelements (50) in Richtung der Kolbenplatte (31) begrenzt und an dem das Zwischenelement (50) über den Fluiddruck abdichtend in Anlage bringbar ist.

2. Relaisventilvorrichtung (1) nach Anspruch 1, wobei das Zwischenelement (50) in einem Bereich zur Anlage am Zwischenelementanschlag (14) planparallel oder schräg ausgebildet ist.

3. Relaisventilvorrichtung (1) nach Anspruch 1 oder 2, wobei die Relaisventilvorrichtung (1) ein Dichtelement (53) aufweist, das so vorgesehen ist, dass das Zwischenelement (50) über das Dichtelement (53) zum Kolbenzapfen (32) abdichtbar ist.

4. Relaisventilvorrichtung (1) nach einem der vorherigen Ansprüche, wobei der Zwischenelementanschlag (14) durch das Gehäuse (10) ausgebildet ist.

5. Relaisventilvorrichtung (1) nach Anspruch 4, wobei die Zwischenelementführung (12) zur Ausbildung des Zwischenelementanschlags (14) gegenüber der Kolbenplattenführung (11) in einer vom Kolbenzapfen (32) abgewandten radialen Richtung in Bezug auf die Längsrichtung (L) rückversetzt ist, so dass der Übergang zwischen der Kolbenplattenführung (11) und der Zwischenelementführung (12) einen Absatz als Zwischenelementanschlag (14) ausbildet.

6. Relaisventilvorrichtung (1) nach einem der vorherigen Ansprüche, wobei die Relaisventilvorrichtung (1) einen Zwischenelementsitz (60) aufweist, der in der Längsrichtung (L) in einer Zwischenelementsitzführung (13) bewegbar und zwischen der Ventileinrichtung (40) und dem Zwischenelement (50) angeordnet ist, und wobei der Zwischenelementsitz (60) derart konfiguriert ist, dass der Zwischenelementsitz (60) zumindest abschnittsweise mit dem Zwischenelement (50) in Anlage bringbar ist und der Zwischenelementsitz (60) das Zwischenelement (50) über den Fluiddruck mit dem Zwischenelementanschlag (14) abdichtend in Anlage bringen kann.

7. Relaisventilvorrichtung (1) nach Anspruch 6, **dadurch gekennzeichnet, dass** der Zwischenelementsitz (60) in einer Position des Relaiskolbens (30), in der die Ventileinrichtung (40) nicht betätigt wird, auf der Ventileinrichtung (40) abdichtend aufsitzt.

8. Relaisventilvorrichtung (1) nach Anspruch 6 oder 7, wobei die Relaisventilvorrichtung (1) einen zwischenelementseitigen Zwischenelementsitzanschlag (15) aufweist, der die Bewegung des Zwischenelementsitzes (60) in Richtung des Zwischenelements (50) begrenzt und an dem der Zwischenelementsitz (60) über den Fluiddruck in Anlage bringbar ist.

9. Relaisventilvorrichtung (1) nach Anspruch 8, wobei der zwischenelementseitige Zwischenelementsitzanschlag (15) durch das Gehäuse (10) ausgebildet ist.

10. Relaisventilvorrichtung (1) nach Anspruch 9, wobei die Zwischenelementsitzführung (13) zur Ausbildung des zwischenelementseitigen Zwischenelementsitzanschlags (15) gegenüber der Zwischenelementführung (12) in einer vom Kolbenzapfen (32) abgewandten radialen Richtung in Bezug auf die Längsrichtung (L) rückversetzt ist, so dass der Übergang zwischen der Zwischenelementführung (12) und der Zwischenelementsitzführung (13) einen Absatz als zwischenelementseitigen Zwischenelementsitzanschlag (15) ausbildet.

11. Relaisventilvorrichtung (1) nach einem der Ansprüche 8 bis 10, wobei in der Längsrichtung (L) der maximale Abstand des Zwischenelements (50) zum Zwischenelementanschlag (14) kleiner oder gleich dem maximalen Abstand des Zwischenelementsitzes (60) zum zwischenelementseitigen Zwischenelementsitzanschlag (15) ist.

12. Relaisventilvorrichtung (1) nach einem der Ansprüche 6 bis 11, wobei die Relaisventilvorrichtung (1) einen zwischenelementabgewandten Zwischenelementsitzanschlag (20) aufweist, der die Bewegung des Zwischenelementsitzes (60) in einer dem Zwischenelement (50) abgewandten Richtung begrenzt.

13. Relaisventilvorrichtung (1) nach Anspruch 12, wobei der zwischenelementabgewandte Zwischenelementsitzanschlag (20) durch zumindest einen Anschlagstift ausgebildet ist.

14. Relaisventilvorrichtung (1) nach einem der Ansprüche 6 bis 13, wobei der Zwischenelementsitz (60) und das Zwischenelement (50) auf einander gegenüberliegenden Seiten jeweils zumindest einen Konturabschnitt (52, 61) aufweisen und die Konturabschnitte (52, 61) so konfiguriert sind, dass sie zur Ausbildung einer Verdrehsicherung in Bezug auf die Längsrichtung (L) gegenseitig formschlüssig in Anlage bringbar sind.

15. Bremsvorrichtung für ein Fahrzeug, insbesondere ein Nutzfahrzeug, wobei die Bremseinrichtung zumindest eine Relaisventilvorrichtung (1) nach einem der Ansprüche 1 bis 14 aufweist.

## Claims

1. Relay valve device (1), in particular for commercial vehicles, having:
a relay piston (30), which is arranged in a housing (10), has a piston pin (32) extending in a longitudinal direction (L) from a piston plate (31) and can be moved in the longitudinal direction (L) in a piston plate guide (11), wherein the piston plate (30) divides an interior of the housing (10) into a volume (80) on the piston pin side and a volume (70) facing away from the piston pin,
a valve apparatus (40), which can be actuated by the piston pin (32) in order to be able to introduce a fluid from a supply pressure reservoir into the volume (80) on the piston pin side, and
an intermediate element (50), which is arranged around the piston pin (32) and divides the volume (80) on the piston pin side into a volume (81) on the piston plate side and a volume (82) facing away from the piston plate and limits the flow rate of the fluid to the piston plate (31) by means of at least one through opening (51),
**characterized in that** the intermediate element (50) can be moved in the longitudinal direction (L) in an intermediate element guide (12) relative thereto and **in that** the relay valve device (1) has an intermediate element stop (14), which limits the movement of the intermediate element (50) in the direction of the piston plate (31) and against which the intermediate element (50) can be brought into sealing contact by means of the fluid pressure.

2. Relay valve device (1) according to claim 1, wherein the intermediate element (50) is formed plane-parallelly or obliquely in a region for bearing against the intermediate element stop (14).

3. Relay valve device (1) according to claim 1 or claim 2, wherein the relay valve device (1) has a sealing element (53), which is provided in such a way that the intermediate element (50) can be sealed off with respect to the piston pin (32) by means of the sealing element (53).

4. Relay valve device (1) according to any one of the preceding claims, wherein the intermediate element stop (14) is formed by the housing (10).

5. Relay valve device (1) according to claim 4, wherein the intermediate element guide (12) is set back relative to the piston plate guide (11) in a radial direction facing away from the piston pin (32) in relation to the longitudinal direction (L) in order to form the intermediate element stop (14), with the result that the transition between the piston plate guide (11) and the intermediate element guide (12) forms a shoulder as an intermediate element stop (14).

6. Relay valve device (1) according to any one of the preceding claims, wherein the relay valve device (1) has an intermediate element seat (60), which can be moved in the longitudinal direction (L) in an intermediate element seat guide (13) and is arranged movably between the valve apparatus (40) and the intermediate element (50), and wherein the intermediate element seat (60) is configured in such a way that the intermediate element seat (60) can be brought into contact with the intermediate element (50) at least in some sections and the intermediate element seat (60) can bring the intermediate element (50) into sealing contact with the intermediate element stop (14) by means of the fluid pressure.

7. Relay valve device (1) according to claim 6, **characterized in that** the intermediate element seat (60) is sealingly placed on the valve apparatus (40) in a position of the relay piston (30) in which the valve apparatus (40) is not actuated.

8. Relay valve device (1) according to claim 6 or claim 7, wherein the relay valve device (1) has an intermediate element seat stop (15) on the intermediate element side, which limits the movement of the intermediate element seat (60) in the direction of the intermediate element (50) and against which the intermediate element seat (60) can be brought into contact by means of the fluid pressure.

9. Relay valve device (1) according to claim 8, wherein the intermediate element seat stop (15) on the intermediate element side is formed by the housing (10).

10. Relay valve device (1) according to claim 9, wherein the intermediate element seat guide (13) is set back relative to the intermediate element guide (12) in a radial direction facing away from the piston pin (32) in relation to the longitudinal direction (L) in order to form the intermediate element seat stop (15) on the intermediate element side, with the result that the transition between the intermediate element guide (12) and the intermediate element seat guide (13) forms a shoulder as an intermediate element seat stop (15) on the intermediate element side.

11. Relay valve device (1) according to any one of claims 8 to 10, wherein the maximum distance of the intermediate element (50) to the intermediate element stop (14) in the longitudinal direction (L) is less than or equal to the maximum distance of the intermediate element seat (60) from the intermediate element seat stop (15) on the intermediate element side.

12. Relay valve device (1) according to any one of claims 6 to 11, wherein the relay valve device (1) has an intermediate element seat stop (20) facing away from the intermediate element and which limits the movement of the intermediate element seat (60) in a direction facing away from the intermediate element (50).

13. Relay valve device (1) according to claim 12, wherein the intermediate element seat stop (20) facing away from the intermediate element is formed by at least one stop pin.

14. Relay valve device (1) according to any one of claims 6 to 13, wherein the intermediate element seat (60) and the intermediate element (50) each have at least one contour section (52, 61) on mutually opposite sides, and the contour sections (52, 61) are configured in such a way that they can be brought into mutual form-fitting contact in relation to the longitudinal direction (L) in order to form an anti-rotation means.

15. Braking device for a vehicle, in particular a commercial vehicle, wherein the braking device has at least one relay valve device (1) according to any one of claims 1 to 14.

## Revendications

1. Dispositif formant soupape relais (1), en particulier pour véhicules utilitaires, présentant :
un piston de relais (30) disposé dans un boîtier (10) qui présente un tourillon de piston (32) s'étendant d'une plaque de piston (31) dans une direction longitudinale (L) et pouvant être déplacé dans la direction longitudinale (L) dans un guide de plaque de piston (11), dans lequel la plaque de piston (30) divise un espace intérieur du boîtier (10) en un volume (80) côté tourillon de piston et un volume (70) opposé au tourillon de piston,
un appareil de soupape (40) qui peut être actionné par le tourillon de piston (32) pour pouvoir introduire un fluide depuis un réservoir de pression de réserve dans le volume (80) côté tourillon de piston, et
un élément intermédiaire (50) disposé autour du tourillon de piston (32), qui divise à son tour le volume (80) côté tourillon de piston en un volume (81) côté plaque de piston et un volume (82) opposé à la plaque de piston et limite le débit d'écoulement du fluide vers la plaque de piston (31) par l'intermédiaire d'au moins une ouverture traversante (51),
**caractérisé en ce que** l'élément intermédiaire (50) est mobile dans la direction longitudinale (L) dans un guide d'élément intermédiaire (12) par rapport à celui-ci et **en ce que** le Dispositif formant soupape relais (1) présente une butée d'élément intermédiaire (14) qui limite le mouvement de l'élément intermédiaire (50) en direction de la plaque de piston (31) et contre laquelle l'élément intermédiaire (50) peut être mis en appui de manière étanche par l'intermédiaire de la pression de fluide.

2. Dispositif formant soupape relais (1) selon la revendication 1, dans lequel l'élément intermédiaire (50) est conçu de manière parallèle au plan ou oblique dans une zone jusqu'à l'appui sur la butée d'élément intermédiaire (14).

3. Dispositif formant soupape relais (1) selon la revendication 1 ou 2, dans lequel le dispositif formant soupape relais (1) présente un élément d'étanchéité (53) qui est prévu de sorte que l'élément intermédiaire (50) peut être étanchéifié par rapport au tourillon de piston (32) par l'intermédiaire de l'élément d'étanchéité (53).

4. Dispositif formant soupape relais (1) selon l'une quelconque des revendications précédentes, dans lequel la butée d'élément intermédiaire (14) est formée par le boîtier (10).

5. Dispositif formant soupape relais (1) selon la revendication 4, dans lequel le guide d'élément intermédiaire (12), pour former la butée d'élément intermédiaire (14), est en retrait par rapport au guide de plaque de piston (11) dans une direction radiale opposée au tourillon de piston (32) par rapport à la direction longitudinale (L), de sorte que la transition entre le guide de plaque de piston (11) et le guide d'élément intermédiaire (12) forme un épaulement en tant que butée d'élément intermédiaire (14).

6. Dispositif formant soupape relais (1) selon l'une quelconque des revendications précédentes, dans lequel le dispositif formant soupape relais (1) présente un siège d'élément intermédiaire (60) qui est mobile dans la direction longitudinale (L) dans un guide de siège d'élément intermédiaire (13) et est disposé entre l'appareil de soupape (40) et l'élément intermédiaire (50), et dans lequel le siège d'élément intermédiaire (60) est configuré de sorte que le siège d'élément intermédiaire (60) peut être mis en appui au moins par sections avec l'élément intermédiaire (50), et le siège d'élément intermédiaire (60) peut mettre en appui de manière étanche l'élément intermédiaire (50) avec la butée d'élément intermédiaire (14) par l'intermédiaire de la pression de fluide.

7. Dispositif formant soupape relais (1) selon la revendication 6, **caractérisé en ce que** le siège d'élément intermédiaire (60) repose de manière étanche sur l'appareil de soupape (40) dans une position du piston de relais (30) dans laquelle l'appareil de soupape (40) n'est pas actionné.

8. Dispositif formant soupape relais (1) selon la revendication 6 ou 7, dans lequel le dispositif formant soupape relais (1) présente une butée de siège d'élément intermédiaire (15) côté élément intermédiaire, butée qui limite le mouvement du siège d'élément intermédiaire (60) en direction de l'élément intermédiaire (50) et contre laquelle le siège d'élément intermédiaire (60) peut être mis en appui par l'intermédiaire de la pression de fluide.

9. Dispositif formant soupape relais (1) selon la revendication 8, dans lequel la butée de siège d'élément intermédiaire (15) côté élément intermédiaire est formée par le boîtier (10).

10. Dispositif formant soupape relais (1) selon la revendication 9, dans lequel le guide de siège d'élément intermédiaire (13), pour former la butée de siège d'élément intermédiaire (15) côté élément intermédiaire, est en retrait par rapport au guide d'élément intermédiaire (12) dans une direction radiale opposée au tourillon de piston (32) par rapport à la direction longitudinale (L), de sorte que la transition entre le guide d'élément intermédiaire (12) et le guide de siège d'élément intermédiaire (13) forme un épaulement en tant que butée de siège d'élément intermédiaire (15) côté élément intermédiaire.

11. Dispositif formant soupape relais (1) selon l'une quelconque des revendications 8 à 10, dans lequel la distance maximale entre l'élément intermédiaire (50) et la butée d'élément intermédiaire (14) dans la direction longitudinale (L) est inférieure ou égale à la distance maximale entre le siège d'élément intermédiaire (60) et la butée de siège d'élément intermédiaire (15) côté élément intermédiaire.

12. Dispositif formant soupape relais (1) selon l'une quelconque des revendications 6 à 11, dans lequel le dispositif formant soupape relais (1) présente une butée de siège d'élément intermédiaire (20) opposée à l'élément intermédiaire, butée qui limite le mouvement du siège d'élément intermédiaire (60) dans une direction opposée à l'élément intermédiaire (50).

13. Dispositif formant soupape relais (1) selon la revendication 12, dans lequel la butée de siège d'élément intermédiaire (20) opposée à l'élément intermédiaire est formée par au moins une tige de butée.

14. Dispositif formant soupape relais (1) selon l'une quelconque des revendications 6 à 13, dans lequel le siège d'élément intermédiaire (60) et l'élément intermédiaire (50) présentent respectivement au moins une section de contour (52, 61) sur des côtés opposés l'un à l'autre, et les sections de contour (52, 61) sont configurées de sorte qu'elles peuvent être mises en appui mutuel par complémentarité de formes pour former une sécurité antirotation par rapport à la direction longitudinale (L).

15. Dispositif de freinage pour un véhicule, notamment un véhicule utilitaire, dans lequel le dispositif de freinage présente au moins un dispositif formant soupape relais (1) selon l'une quelconque des revendications 1 à 14.
